## Europäisches Patentamt
## European Patent Office
## Office européen des brevets

(11) Veröffentlichungsnummer: **0 285 082**
**A2**

(12) **EUROPÄISCHE PATENTANMELDUNG**

(21) Anmeldenummer: **88105040.5**

(22) Anmeldetag: **29.03.88**

(51) Int. Cl.4: **G01F 1/36 , G01F 1/88**

(30) Priorität: **01.04.87 DE 3710968**

(43) Veröffentlichungstag der Anmeldung:
**05.10.88 Patentblatt 88/40**

(84) Benannte Vertragsstaaten:
**DE FR GB IT NL SE**

(71) Anmelder: **Hydrotechnik GmbH**
**Holzheimer Strasse 94-96**
**D-6250 Limburg 1(DE)**

(72) Erfinder: **Hofmann, Manfred**
**Lahnblick 28**
**D-6251 Altendiez(DE)**

(74) Vertreter: **Linser, Heinz et al**
**Patentanwälte Heinz Linser Dipl. Ing.**
**Eckhardt Eyer Robert-Bosch-Strasse 12a**
**Postfach 10 22 10**
**D-6072 Dreieich(DE)**

(54) **Vorrichtung zur Prüfung der Komponenten eines hydraulischen Hochdrucksystems.**

(57) Die Erfindung betrifft eine Vorrichtung zur Messung des Volumen-oder Massestromes nach dem Wirkdruckverfahren in einem fluidischen System mit einer Meßstrecke, welche eine Blende mit Meßpunkten auf ihren beiden Wirkdruckseiten aufweist. Auf einer Wirkdruckseite der Blende sind in einer Radialschnittebene zwei Druckmeßpunkte zum Nullabgleich der beiden Drucksensoren unter Betriebsbedingungen bei beliebigem Referenzdruck angeordnet. Hierfür weisen die Druckmeßpunkte in der Wandung (6) der Meßstrecke (1) Bohrungen zur Aufnahme von Meßkupplungen (9,10) auf, welche mit jeweils einem Drucksensor (15,16) unter Betriebsdruck verbindbar sind. Die in einer Radialschnittebene liegenden Druckmeßpunkte (9,13) sind stromeingangsseitig angeordnet. Gemäß dem Verfahren nach der Erfindung werden vor Beginn einer Messung die beiden Drucksensoren mit den auf einer Wirkdruckseite angeordnete Druckmeßpunkten gleichzeitig und unter den herrschenden Betriebsbedingungen (Betriebsdruck und Temperatur) zur Durchführung eines Nullabgleichs über die Auswerte-und Anzeigevorrichtung verbunden, und unmittelbar nach dem Nullabgleich wird einer der Sensoren entkuppelt und mit der Meßkupplung auf der anderen Seite der Meßblende eingekuppelt, um die Volumenstrommessung durchzuführen.

## Vorrichtung zur Prüfung der Komponenten eines hydraulischen Hochdrucksystems

Die Erfindung betrifft eine Vorrichtung zur Prüfung der Komponenten eines hydraulischen Hochdrucksystems durch Erfassung und Auswertung der Betriebsmeßdaten, insbesondere des Volumen-oder Massestromes, mit mindestens einer eine austauschbare Meßblende aufweisende Meßstrecke und Meßanschlüssen auf beiden Seiten der Meßblende zum Anschluß von Drucksensoren, wobei zwei Meßanschlüsse vorzugsweise vor der Meßblende angeordnet sind.

Die Erfindung betrifft ferner ein Verfahren zur Prüfung der Komponenten eines hydraulischen Hochdrucksystems unter Verwendung der oben aufgeführten Vorrichtung.

Die Durchflußmessung nach dem Wirkdruckverfahren ist trotz vieler Neuentwicklungen noch immer das am meisten angewendete Meßverfahren. Als Wirkdruck wird hierbei die Differenz zwischen den Absolutdrücken auf der Einlaufseite und der Auslaufseite eines Wirkdruckgebers verstanden. Als Wirkdruckgeber wird hierbei eine Vorrichtung angesehen, welche durch Verengen des Strömungs-Rohrquerschnittes in einer mit einem zu messenden Fluid durchflossenen Rohrleitung den Wirkdruck zum Messen des Durchflusses erzeugt.

Es sind bereits preiswerte Vorrichtungen für die Messung von Drucken und Temperaturen in fluidischen Anlagen bekannt, welche Sensoren in einfacher und auch in kombinierter Ausführung verwenden.

Meßstrecken dieser Art sind technisch ausgereift und finden in der Fluidtechnik weite Verbreitung. Hierfür steht ein breit gefächertes und preiswertes Meßgeräte-und Sensorprogramm zur Verfügung, wobei in zunehmendem Maße auch multifunktionale, mikroprozessorbetriebene Meßgeräte zur Anwendung kommen.

Als Beispiel sei hier die Differenzdruckmessung mit zwei Drucksensoren herausgegriffen, die auf einfachste Art und Weise über Tastenvorwahl am prozessorbetriebenen Meßgerät durchgeführt werden kann.

Es sind technisch hervorragende und leistungsfähige Volumenstromsensoren bekannt, deren Anwendungen für Betriebsmessungen jedoch aus Preis-oder gerätetechnischen Gründen im Service-oder Kundendienst keine oder nur sporadische Anwendung finden.

Es stehen somit für die Messung eines Volumenstromes bis heute keine geeigneten Meßgeräte und Meßstrecken zur Verfügung, welche für den Einsatz in einem Betrieb unter rauhen Bedingungen geeignet sind, beispielsweise zur Überprüfung und Messung der Leistung einer hydraulischen Pumpe eines schweren Fahrzeugs für Erdbewegungen oder dergleichen im Feld.

Die "Entfeinerung" solcher Volumenstromsensoren führte meist nicht zu dem angestrebten Ziel, weil der konstruktive Aufbau und die damit zusammenhängende Präzision nicht ohne schwerwiegende Gefährdung der Gesamtfunktion geändert werden konnte.

Aus den DE-GB 81 18 656 und 81 23 417 sind ferner Meßblenden mit fest angebauten Hahn-oder Ventilblöcken bekannt. Der Zweck dieser Hahn-oder Ventilblöcke besteht unter anderem darin, eine Überprüfung bzw. Nachkalibrierung des Wirkdruck-Meßumformers im eingebauten Zustand durchzuführen.

Diese Ventilblöcke sind aufwendig und teuer und daher für Betriebsgeräte nicht geeignet.

Für hydraulische Pumpen-oder Motorantriebe bei mobilen und stationären Hydraliksystemen wird ein robustes und kompaktes sowie preiswertes Betriebsmeßgerät und Verfahren gefordert.

Pumpen oder Motorantriebe in Hydrauliksystemen stellen teure und funkionswichtige Systeme und Komponenten dar.

Sie unterliegen einem je nach Betriebsparametern auftretenden Verschleiß und damit einer Änderung der spezifischen Kenndaten. Im Zuge einer vorbeugenden oder planbaren Instandhaltung der Hydrauliksysteme ist es erforderlich, Betriebsmeßdaten auf einfache Weise zu ermitteln, um die Verfügbarkeit und Betriebssicherheit dieser Anlagen zu erhöhen.

Wichtige Eckwerte sind hierbei der Volumenstrom, der Betriebs-oder Nominaldruck und die Betriebsmitteltemperatur bei Nominaldrehzahl der hydraulischen Pumpen und Motoren. Diese Betriebsmeßdaten sind bei härtesten Umweltbelastungen, wie höchsten hydraulischen Drücken, Schock, Stoß, Vibrationen und hohen Temperaturen in einer zuverlässigen und mit ausreichender Betriebsgenauigkeit arbeitenden Meßverfahren und Meßvorrichtung zu ermitteln. Weitere Kennzeichen und Forderungen sind Verschmutzungsunempfindlichkeit und leichte Bedienbarkeit.

Der Erfindung liegt die Aufgabe zugrunde, mit den eingangs beschriebenen Druck-und Temperaturmeßgeräten und mit Hilfe geeigneter Druck-und Temperaturmeßpunkte, sowie zwei Drucksensoren eine Volumenstrommeßeinrichtung und ein diesbezügliches Meßverfahren anzugeben, welches einerseits eine für Betriebsmessungen ausreichende Genauigkeit aufweist und andererseits so preiswert ist, daß einer Akzeptanz im Kundendienst nichts mehr im Wege steht.

Im Gegensatz zu den üblicherweise bei Wirkdruckmessungen eingesetzten teuren Differenzdrucksensoren wird ferner ein Einsatz von handelsüblichen Drucksensoren vorgeschlagen, wobei weitere Randbedingungen wie Hochdruckfestigkeit, Schmutzunempfindlichkeit und die leichte Handhabung erfüllt sein sollen.

Aus der Literatur ist es bekannt, daß der Meßfehler der Differenzdruckmessung in halber Größe in die Volumen-bzw. Massestromlösung eingeht.

Unter Berücksichtigung dieser Tatsache erfolgt die Lösung dieser Aufgabe gemäß der Erfindung dadurch, daß bei der eingangs aufgeführten Vorrichtung die Meßanschlüsse als leckagefreie, unter Betriebsdruck mit den Anschlüssen der Drucksensoren kuppelbare, gleichartige Schnellkupplungen ausgebildet sind und die Drucksensoren mit einem prozessorgesteuerten Auswertegerät galvanisch verbunden sind, wobei einer der Drucksensoren bei den jeweils geltenden Betriebsbedingungen bei beliebigem Referenzdruck sowohl in Nullabgleichschaltung als auch in Meßschaltung bringbar ist.

Die Druckmeßpunkte befinden sich somit auf einer Wirkdruckseite in einer Radialschnittebene der eingangs aufgeführten Vorrichtung, mit deren Hilfe ein Nullabgleich der beiden Drucksensoren unter Betriebsbedingungen bei beliebigem Referenzdruck durchführbar ist. Hierdurch ist sichergestellt, daß der kurz vor der Messung durchzuführende Nullabgleich auch tatsächlich unter den herrschenden Betriebsbedingungen ausgeführt werden kann.

Bezogen auf den Gesamtfehler eines Sensorpaares geht durch diese Maßnahme nach der Erfindung nur noch ein erheblich niedrigerer Teilfehler in die Fehlerrechnung ein, wobei auch temperaturabhängige Fehlerabweichungen (Temperaturdriften) und mechanische Ermüdungserscheinungen (mechanisches Abdriften) automatisch berücksichtigt und damit ausgeschlossen sind, da der Nullabgleich unter Betriebsbedingungen, d.h. auch bei den vorhandenen Betriebstemperaturen durchgeführt wird, welche bei den durchzuführenden Messungen vorherrschen.

Nach der Erfindung ist es besonders vorteilhaft eine Meßkupplung mit einem kombinierten Druck-Temperatursensor zur gleichzeitigen Messung von Druck und Temperatur zu verwenden. Es lassen sich damit aber auch separate Druck-und Temperaturmessungen durchführen.

In einer bevorzugten Ausführungsform der Erfindung ist die Meßblende auswechselbar ausgebildet. Hierdurch kann der Meßbereich in einfacher Weise dem Meßbedarf angepaßt werden.

Die Meßblende ist in vorteilhafter Weise an ihrem Umfang mit mindestens einer O-Ringdichtung zur Meßstrecke abgedichte.

Zur Ausgestaltung einer im Feld verwendbaren robusten Meßeinrichtung ist die Meßstrecke nach der Erfindung mit ihren Meßkupplungen als kompakte Meßeinrichtung ausgebildet.

Zur Durchführung einer vollständigen Messung einschließlich des Nullabgleichs wird bevorzugt eine Auswerte-und Anzeigevorrichtung eingesetzt, welche vorzugsweise prozessorgesteuert ist und welche mit den von den Meßkupplungen aufgenommenen Sensoren galvanisch verbunden ist.

Die in einer Radialschnittebene liegenden Druckmeßpunkte sind in besonders vorteilhafter Weise stromeingangsseitig angeordnet. Dadurch wird der durchzuführende Nullabgleich unter dem höheren Eingangsdruck durchgeführt, wodurch sich vorteilhaftere Teilfehlerwerte ergeben, welche die Fehlerrechnung günster gestalten und zu genaueren Meßwerten führen.

Gemäß dem Verfahren nach der Erfindung werden vor Beginn einer Messung die beiden Drucksensoren mit den auf einer Wirkdruckseite angeordneten Druckmeßpunkten gleichzeitig und unter den herrschenden Betriebsbedingungen, wie Betriebsdruck und Temperatur, zur Durchführung eines Nullabgleichs über die Auswerte-und Anzeigevorrichtung verbunden. Hierdurch erfolgt ein Nullabgleich, so daß die Fehlerrechnung mit einem weitaus kleineren Teilfehler durchgeführt werden kann.

Unmittelbar nach dem Nullabgleich wird einer der Drucksensoren aus seiner Druckmeßkupplung entkuppelt und mit der auf der anderen Seite der Meßblende angeordneten Druckmeßkupplung eingekuppelt und damit in seine Meßschaltung gebracht.

Somit läßt sich mit relativ robusten Geräten und an sich unzulässigen Fehlergrenzen die Genauigkeit der Messungen mit einfachen Mitteln verbessern.

Dies ist aber nur dann sinnvoll, wenn ein Sensorabgleich (Nullabgleich) bei den in Frage kommenden Systemdrücken problemlos vor Ort durchgeführt werden kann.

Falls sich die Betriebsparameter wie Volumenstrom, Druck und Temperatur über ein zulässiges Maß ändern, ist ein erneuter Drucksensorwechsel in die Nullabgleichschaltung und damit eine Korrektur vorgesehen, d.h. der Bediener ist zu jedem Zeitpunkt und bei jeder Betriebsbedingung in der Lage, die Betriebsgenauigkeit zu optimieren.

Es ist die Möglichkeit gegeben, auch den Druck und die Betriebsmitteltemperatur getrennt voneinander zu messen und mit Hilfe der prozessorgesteuerten Vorrichtung aufzuzeichnen und zu verarbeiten.

Die Erfindung wird anhand der Zeichnungen näher erläutert. Hierbei zeigen:

FIGUR 1 einen Längsschnitt durch die Meßstrecke mit einer Meßblende und Meßanschlüssen vor und hinter der Blende;

FIGUR 2 einen Querschnitt A-B nach Figur 1;

FIGUR 3 eine schematische Darstellung einer Meßanordnung mit Meßstrecke, Sensoren und mit einem prozessorgesteuerten Auswertegerät in Meßschaltung;

FIGUR 4 eine schematische Darstellung einer Meßanordnung mit Meßstrecke, Sensoren und mit einem prozessorgesteuerten Auswertegerät in Nullabgleichschaltung, und

FIGUR 5 ein Druck-Spannungsdiagramm mit Drucksensor-Kennlinien.

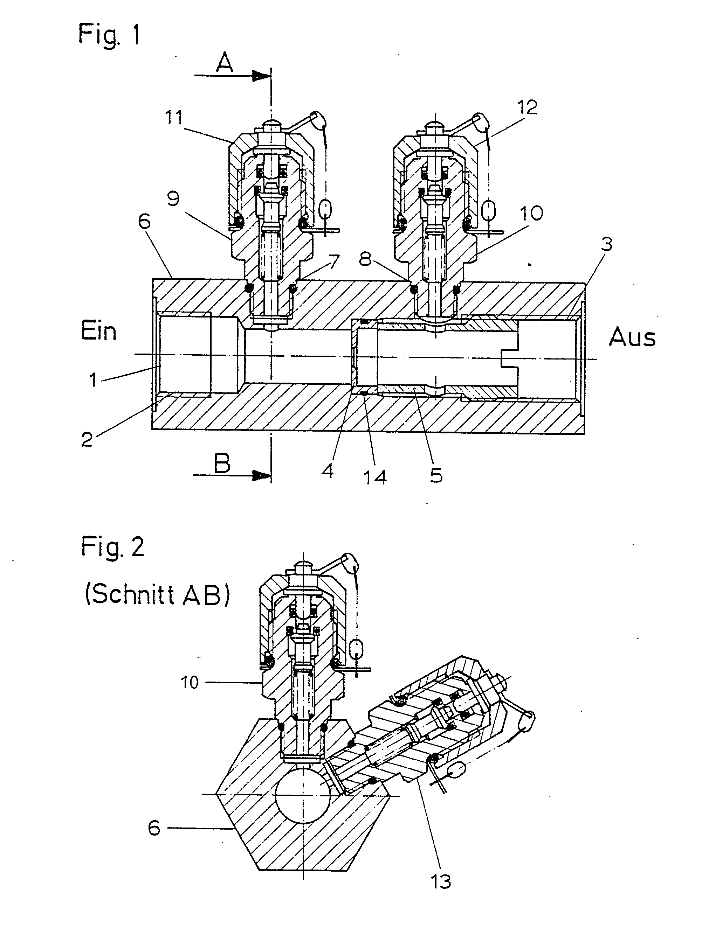

Die Figuren 1 und 2 zeigen die Meßstrecke der Vorrichtung zur Messung des Volumenstromes nach dem Wirkdruckverfahren in einem fluidischen System. Eine Meßstrecke 1, welche an ihren Enden mit Einschraub-bzw. mit Verschraubungselementen 2 und 3 versehen ist, weist in ihrem mittleren Teil eine Blende 4 auf, welche durch eine Hohlschraube gehalten wird. Vor und hinter der Blende 4 sind im Strömungskanalmantel 6 Bohrungen 7 und 8 vorgesehen, welche zur Aufnahme der Meßkupplungen 9 und 10 dienen. Diese Meßkupplungen 9 und 10 sind jeweils mit einer Schraubkappe 11 und 12 versehen, welche zur Durchführung einer Messung gelöst werden, so daß in an sich bekannter Weise der Meßanschluß eingeführt werden kann. Der Meßanschluß stößt das Ventil der Meßkupplung auf, wodurch die Druckverbindung zum Drucksensor 15 bzw. 16 hergestellt ist.

Die Figur 2 zeigt den Schnitt A-B nach Figur 1. In der gleichen Ebene, in der sich die Meßkupplung 10 befindet, ist eine weitere Meßkupplung 13 vorgesehen, welche zur Durchführung des Nullabgleichs der beiden Drucksensoren unter Betriebsbedingungen bei beliebigem Referenzdruck dient.

Wie aus beiden Figuren 1 und 2 ersichtlich ist, ist die Meßblende 4 an ihrem Umfang mit einer O-Ringdichtung 14 zur Meßstrecke 1 abgedichtet.

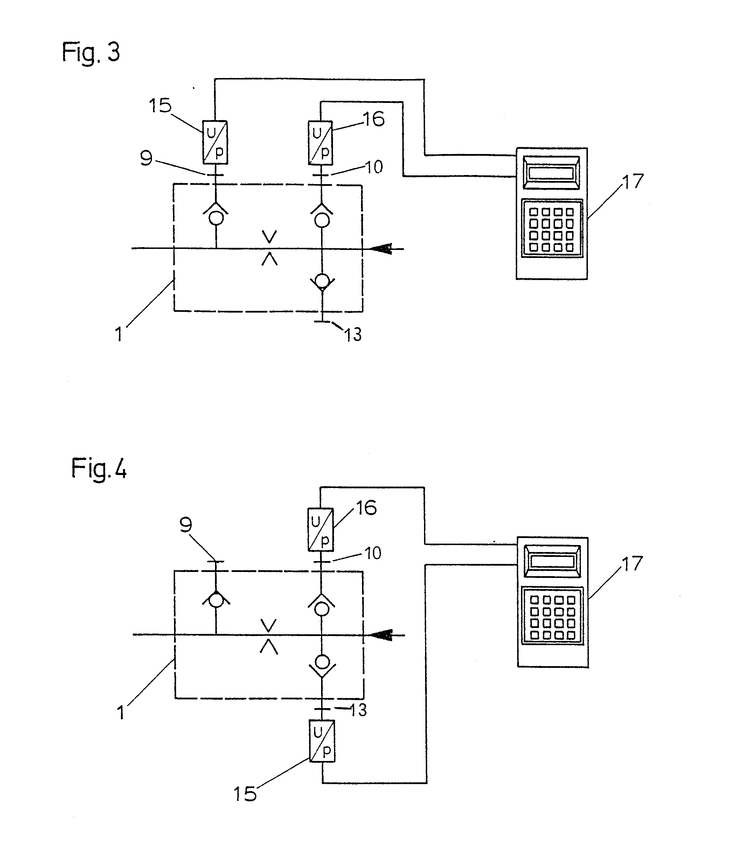

Die Figur 3 zeigt in schematischer Darstellung die Meßstrecke 1 mit den Meßanschlüssen 9 und 10, den Sensoren oder Druckwandlern 15 und 16 und dem prozessorgesteuerten Auswertegerät 17 in Meßschaltung.

Die Figur 4 zeigt den gleichen Geräteaufbau wie die Figur 3, jedoch in der Schaltung zur Durchführung eines Nullabgleichs der Sensoren oder Druckwandler 15 und 16. Da die Meßpunkte der Bohrungen in einer Referenzebene liegen, werden die Sensoren 15 und 16 gleichzeitig mit dem gleichen Druck unter gleichen Betriebsbedingungen beaufschlagt, so daß die zwischen den Sensoren bestehende Fehlerabweichung direkt ermittelt werden kann.

Diese Messung kann unter allen Betriebsbedingungen durchgeführt werden, so daß die Fehlerabweichung der beiden Sensoren direkt ermittelt wird, welche unter den relevanten Betriebsbedingungen herrscht, welche auch für die Messung maßgebend sind. Damit wird auch gleichzeitig eine mögliche Temperaturdrift berücksichtigt, da der Nullabgleich auch unter den herrschenden Temperaturbedingungen durchgeführt wird.

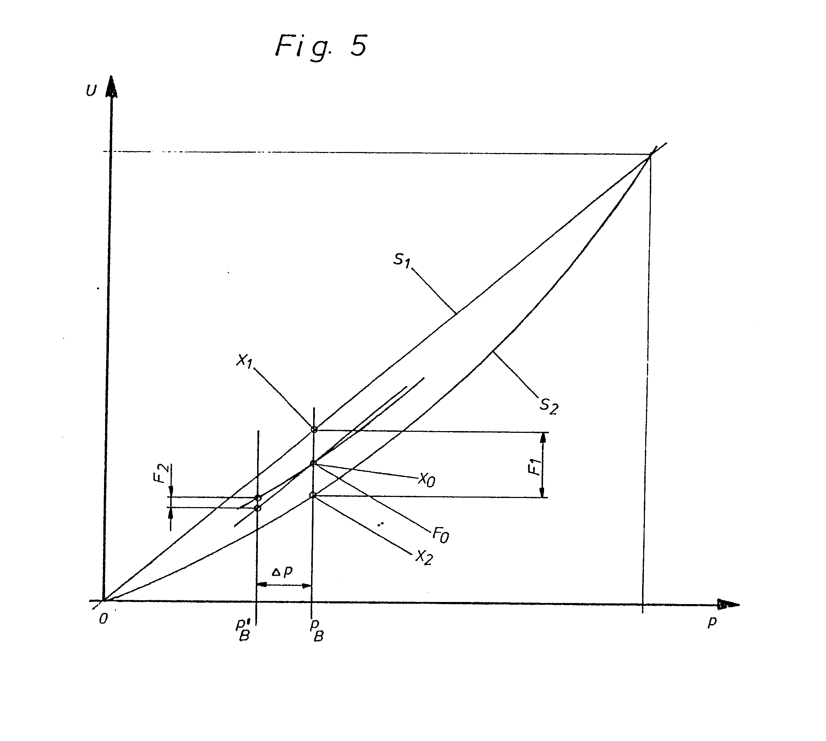

Zur weiteren Veranschaulichung der Erfindung ist in Figur 5 ein Funktionsdiagramm wiedergegeben. Die Ausgangsspannung U der Drucksensoren ist hierbei über den Druck P aufgetragen. Die Kennlinie eines idealen Drucksensors ist mit S1 bezeichnet und stellt eine Gerade dar, während die Kurve S2 die gekrümmte Kennlinie eines Drucksensors mit maximal zulässigem Fehler wiedergibt. Der Druck P(B) bezeichnet den Betriebsdruck vor der Meßblende, der Druck P(B)' den Betriebsdruck nach der Meßblende. Die Differenz zwischen P(B) und P(B)' ist gleich dem Druckabfall an der Meßblende und ist mit P bezeichnet.

Die Werte XI und X2 kennzeichnen die entsprechenden fehlerbehafteten Meßwerte bzw. Kennlinienschnittpunkte der Sensoren. F(1) bezeichnet den ursprünglichen Linearitätsfehler.

Wird bei dem Betriebsdruck P(B) ein Nullabgleich durchgeführt, so ergibt sich ein errechneter Meßwert X0 aus dem arithmetischen Mittel von X1 und X2. Durch Parallelverschiebung der Kennlinien in den Wert X0 ergeben sich Teilfehler F(2) für alle wahren Betriebsdifferenzdrucke.

Der Teilfehler F(2) beträgt beim Betriebsdruck P(B) Null und wächst beim Betriebsdruck P(B)' auf ein Maximum, das aber nur einen Bruchteil der ursprünglichen Linearitätsfehler aufweist.

Durch diese einfache Maßnahme nach der Erfindung lassen sich die Messungen erheblich verbessern, wobei handelsübliche Drucksensoren für eine Volumen-oder Massestrommessung mit einer Meßblende verwendet werden können und der apparative Aufwand minimiert wird.

Gleichzeitig wird aber auch die Langzeitstabilität dadurch sichergestellt, daß vor der Messung stets ein Nullabgleich erfolgt, wodurch auch der durch eine mechanische Abdrifft oder eine Alterung bewirkte Meßfehler beseitigt wird. Zu diesen Fehlern gehören Ermüdungserscheinungen an der Membrane durch ständige hohe Druckstöße, Alterungserscheinungen und dergleichen. Damit können Sensoren minderer und auch unterschiedlicher Qualität verwendet werden, da die Fehler durch den Nullabgleich stets rechnerisch berücksichtigt werden.

## Ansprüche

1. Vorrichtung zur Prüfung der Komponenten eines hydraulischen Hochdrucksystems durch Erfassung und Auswertung der Betriebsmeßdaten, insbesondere des Volumen-oder Massestromes, mit mindestens einer eine austauschbare Meßblende aufweisende Meßstrecke, und Meßanschlüssen auf beiden Seiten der Meßblende zum Anschluß von Drucksensoren, wobei zwei Meßanschlüsse vorzugsweise vor der Meßblende angeordnet sind, dadurch gekennzeichnet, daß die Meßanschlüsse als leckagefreie, unter Betriebsdruck mit den Anschlüssen der Drucksensoren kuppelbare, gleichartige Schnellkupplungen ausgebildet sind und die Drucksensoren mit einem prozessorgesteuerten Auswertegerät galvanisch verbunden sind, wobei einer der Drucksensoren bei den jeweils geltenden Betriebsbedingungen bei beliebigem Referenzdruck sowohl in Nullabgleichschaltung als auch in Meßschaltung bringbar ist.

2. Vorrichtung nach Anspruch 1, dadurch gekennzeichnet, daß einer der Drucksensoren als kombinierter Druck-Temperatursensor zur gleichzeitigen Messung von Druck und Temperatur ausgebildet ist.

3. Vorrichtung nach Anspruch 1 oder 2, dadurch gekennzeichnet, daß die Meßblende (4) an ihrem Umfang mit mindestens einer O-Ringdichtung (14) zur Meßstrecke (1) abgedichtet ist.

4. Vorrichtung nach Anspruch 1 oder einem der voranstehenden Ansprüche, dadurch gekennzeichnet, daß die Meßstrecke (1) mit ihren Meßkupplungen (9,10) als kompakte Meßeinrichtung (1) ausgebildet ist.

5. Vorrichtung nach Anspruch 1 oder einem der voranstehenden Ansprüche, dadurch gekennzeichnet, daß die prozessorgesteuerte Auswertevorrichtung zur Aufnahme und Auswertung der von den Drucksensoren abgegebenen Meßwerte und zur Ermittlung ihrer Fehlerabweichung Speicher und eine Anzeigevorrichtung (17) aufweist.

6. Verfahren zur Prüfung der Komponenten eines hydraulischen Hochdrucksystems durch Erfassung und Auswertung der Betriebsmeßdaten, insbesondere des Volumen-oder Massestromes, unter Verwendung der Vorrichtung nach Anspruch 1 oder einem der voranstehenden Ansprüche, dadurch gekennzeichnet, daß vor Beginn einer Messung die beiden Drucksensoren mit den auf einer Wirkdruckseite angeordneten Druckmeßkupplungen gleichzeitig und unter den herrschenden Betriebsbedingungen, wie Betriebsdruck und Temperatur, zur Durchführung eines Nullabgleichs über die Auswerte-und Anzeigevorrichtung verbunden werden, wobei unmittelbar nach dem Nullabgleich einer der Drucksensoren aus seiner Druckmeßkupplung entkuppelt und mit der auf der anderen Seite der Meßblende angeordneten Druckmeßkupplung eingekuppelt und damit in seine Meßschaltung gebracht wird.

7. Verfahren zur Prüfung der Komponenten eines hydraulischen Hochdrucksystems nach Anspruch 6, dadurch gekennzeichnet, daß der Nullabgleich bei sich ändernden Betriebsbedingungen mehrfach wiederholbar ist.

0 285 082

# Fig. 1

A

11
12
9
6
7  8  10  3

Ein

1
2

Aus

B
4  14  5

# Fig. 2
(Schnitt AB)

10

6

13

Fig. 3

Fig.4

Fig. 5

0 285 082